Europäisches Patentamt

European Patent Office

Office européen des brevets

(19)

(11) Veröffentlichungsnummer: **0 170 725**
**A1**

(12) **EUROPÄISCHE PATENTANMELDUNG**

(21) Anmeldenummer: 84115613.6

(22) Anmeldetag: **17.12.84**

(51) Int. Cl.⁴: **G 01 C 21/12**

(30) Priorität: **03.07.84 DE 3424441**

(43) Veröffentlichungstag der Anmeldung: **12.02.86**
**Patentblatt 86/7**

(84) Benannte Vertragsstaaten: **AT BE CH DE FR IT LI NL**

(71) Anmelder: **Siemens Aktiengesellschaft, Berlin und München Wittelsbacherplatz 2, D-8000 München 2 (DE)**

(72) Erfinder: **von Tomkewitsch, Romuald, Dipl.-Ing., Winklweg 8, D-8026 Ebenhausen (DE)**

(54) **Zielführungseinrichtung für ein Fahrzeug.**

(57) Bei einem Navigationssystem, mit dem unter Zuhilfenahme einer Koppelnavigationseinrichtung eine Anzeige für einen Zielpunkt nach Richtung (4) und Entfernung (3) erfolgt, wird zusätzlich eine Windrose (7, 8, 9, 10) angezeigt. Damit kann der Fahrer des Fahrzeugs die angezeigte Zielrichtung mit der tatsächlichen Himmelsrichtung vergleichen und damit deren Glaubwürdigkeit überprüfen.

EP 0 170 725 A1

0170725

Siemens Aktiengesellschaft                    Unser Zeichen
Berlin und München                            VPA
                                              84 P 1 4 8 1 E

Zielführungseinrichtung für ein Fahrzeug

Die Erfindung bezieht sich auf eine Zielführungseinrichtung für ein Fahrzeug, wobei im Fahrzeug eine Eingabeeinrichtung zur Eingabe einer Zieladresse, eine Koppelnavigationseinrichtung zur ständigen Kontrolle der Fahrzeugbewegungen nach Richtung und Weg sowie eine Anzeigeeinrichtung zur Anzeige einer auf die Fahrzeuglängsachse bezogenen Zielrichtung in Abhängigkeit von den Ausgangssignalen der Koppelnavigationseinrichtung und/oder in Abhängigkeit von Informationen einer externen Sendeeinrichtung aufweist.

Eine derartige Einrichtung ist aus der DE-OS 29 41 331 bekannt. Dort wird mit der Koppelnavigationseinrichtung fortlaufend der zurückgelegte Weg vektoriell von einem anfänglichen Zielvektor subtrahiert, und der daraus erhaltene aktuelle Zielvektor wird im Fahrzeug ständig nach Betrag und Richtung angezeigt.

Weiterhin ist aus der US-PS 3 002 282 eine Positionsanzeigeeinrichtung für Fahrzeuge bekannt, wobei in einem Rundinstrument die Fahrtrichtung des Fahrzeugs mit einem ersten Zeiger und die Zielrichtung mit einem zweiten Zeiger angezeigt werden. Allerdings ist dort die Anzeige nicht mit der Fahrzeuglängsachse verknüpft, vielmehr weicht der Zeiger für die eingeschlagene Fahrtrichtung im allgemeinen von dieser Längsachse ab, so daß es für den Fahrer schwierig ist, sich die tatsächliche Zielrichtung von seiner tatsächlichen Fahrtrichtung aus zu vergegenwärtigen.

Pr 1 Fra / 02.07.1984

Bei derartigen Systemen ist es in jedem Fall notwendig, daß der Benutzer zu Beginn der Fahrt seine Zieladresse in Form von Koordinaten oder Codenummern eingibt und speichert. Dies kann beispielsweise über Tastaturen oder auch über automatische Lesegeräte erfolgen, wenn ein entsprechend präpariertes Kartenmaterial vorhanden ist. Auch eine Spracheingabe ist durchaus vorstellbar. In all diesen Fällen muß jedoch mit Eingabefehlern gerechnet werden, die entweder auf einem Irrtum des Bedienenden, auf fehlerbehaftenden Informationsquellen für die Zieladressen oder auf technischen Defekten der Eingabeapparatur beruhen können. Unabhängig davon, worauf auch immer eine unrichtige Zielcodierung zurückzuführen ist, wird das Fahrzeug als Folge eines solchen Fehlers zu einem falschen Ziel geführt.

Es ist prinzipiell unmöglich, solche Fehlfunktionen eines Zielführungssystems unter allen Umständen zu vermeiden. Bietet man dem Benutzer des Gerätes jedoch die Möglichkeit für Plausibilitätskontrollen, so wird er Eingabefehler mit einer gewissen Wahrscheinlichkeit sofort oder nach kurzer Fahrzeit erkennen und korrigieren. Gewisse Möglichkeiten einer Plausibilitätskontrolle bieten sich dem Fahrer auch bereits bei dem eingangs erwähnten System. Da dort die Luftlinienrichtung und die Entfernung zum Ziel angezeigt wird, und die meisten Fahrer von der zurückzulegenden Fahrstrecke eine ungefähre Vorstellung haben, so wird die Eingabe überprüft bzw. wiederholt werden, wenn die angezeigte Zielentfernung erheblich von dieser Vorstellung abweicht.

Weit schwieriger ist es, die Glaubwürdigkeit der Richtungsanzeige zu überprüfen. Es kann zwar im allgemeinen eine Kenntnis der geografischen Lage von Start- und Zielort vorausgesetzt werden; Fahrern mit nicht sehr ausgeprägtem Orientierungssinn fällt es jedoch in einer unbekannten Umgebung schwer, die Stand- oder Fahrtrichtung ihres Fahrzeugs oder die Richtung der gerade befahrenen Straße richtig einzuschätzen. Ohne eine solche Richtungsschätzung kann aber die angezeigte Luftlinienrichtung zum Reiseziel nicht überprüft werden, denn sie bezieht sich ja auf die Längsausrichtung des Fahrzeugs.

Aufgabe der Erfindung ist es, das eingangs genannte Zielführungssystem so weiterzubilden, daß der Benutzer des Fahrzeugs ohne großen technischen Aufwand die Möglichkeit erhält, auch die angezeigte Richtung zum Ziel auf Plausibilität zu überprüfen.

Erfindungsgemäß wird diese Aufgabe dadurch gelöst, daß die Anzeigeeinrichtung zusätzlich eine von den Ausgangssignalen der Koppelnavigationseinrichtung steuerbare Anzeige der Himmelsrichtung aufweist.

Mit der erfindungsgemäßen Ergänzung der Zielrichtungsanzeige mit der absoluten Anzeige der Himmelsrichtung kann der Fahrer des Fahrzeugs abschätzen, ob die aufgrund seiner Eingabe angezeigte Zielrichtung glaubwürdig ist oder nicht. Denn in der Regel wird der Fahrer wissen oder aus der Karte, aus der er die Zieladresse entnimmt, ablesen, in welcher Himmelsrichtung sein Ziel in etwa liegen müßte. Die erfindungsgemäße Einrichtung erfordert auch nur einen geringen gerätetechnischen Mehraufwand. Es muß lediglich das Anzeigegerät in der Weise ergänzt werden, daß eine zweite Richtungsanzeige möglich ist, beispielsweise in Form einer koaxial zur Zielrichtungsanzeige vorgesehenen veränderbaren Anzeige für eine Windrose. Für die Gewinnung der Steuersignale sind keine zusätzlichen Instrumente erforderlich, da das Fahrzeug in der Koppelnavigationseinrichtung ohnehin einen Kompaß aufweist, aus dessen Ausgangssignalen sich die absolute Himmelsrichtung ableiten läßt.

Als Anzeigemittel können bekannte Elemente, beispielsweise LCD-Elemente, verwendet werden.

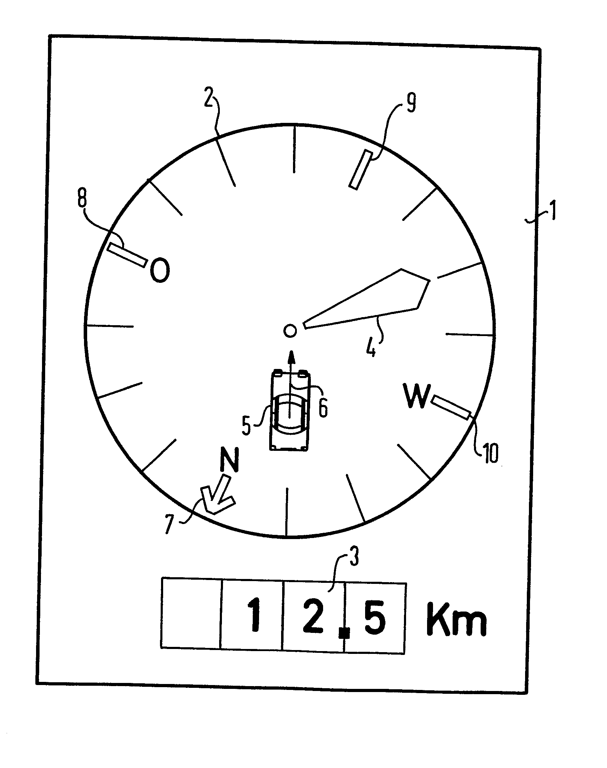

Die Erfindung wird nachfolgend an einem Ausführungsbeispiel anhand der Zeichnung näher erläutert.

Die einzige Figur zeigt schematisch ein Anzeigefeld 1 mit einem Rundinstrument 2 zur Angabe der Zielrichtung und einer Ziffernanzeige 3 zur Angabe der Zielentfernung. Die Zielrichtung wird in dem Rundinstrument 2 mit einem wandernden Zeiger 4 dargestellt.

Bei dem gezeigten Ausführungsbeispiel erkennt der Fahrer also an der Ziffernanzeige 3, daß sein Ziel in einer Luftlinienentfernung von 12,5 km liegt. Außerdem entnimmt er der Stellung des Zeigers 4, daß sein Ziel bezüglich der Fahrzeuglängsachse schräg rechts liegen muß. In der Zeichnung ist das Fahrzeug 5 mit der Längsachse 6 als Pfeil dargestellt; bei dem tatsächlichen Anzeigefeld im Fahrzeug ist diese Darstellung natürlich nicht erforderlich, da die Blickrichtung des Fahrers ohnehin mit der Längsachse zusammenfällt.

Zusätzlich ist in dem Rundinstrument 2 eine Windrose angezeigt, wobei der Pfeil 7 die Nordrichtung und die Striche 8, 9 und 10 die weiteren Richtungen Ost, Süd und West angeben. Aus dieser Windrose ist erkennbar, daß die Fahrzeuglängsachse nach Süd-Südost ausgerichtet ist. Somit erkennt der Fahrer sofort, daß der Richtungspfeil 4 nach Südwest zeigt. Er wird also, sofern er die Zielanzeige akzeptiert, zu seinem Ziel geleitet werden, das in südwestlicher Richtung 12,5 km von seinem derzeitigen Standort entfernt liegt. Die Informationen sowohl über die Zielrichtung als auch über die Himmelsrichtung stammen von dem nicht weiter dargestellten Koppelnavigationssystem, das für die Zielführung ohnehin erforderlich ist.

3 Patentansprüche
1 Figur

## Patentansprüche

1. Zielführungseinrichtung für ein Fahrzeug, wobei im Fahrzeug eine Eingabeeinrichtung zur Eingabe einer Zieladresse, eine Koppelnavigationseinrichtung zur ständigen Kontrolle der Fahrzeugbewegungen nach Richtung und Weg sowie eine Anzeigeeinrichtung zur Anzeige einer auf die Fahrzeuglängsachse bezogenen Zielrichtung in Abhängigkeit von den Ausgangssignalen der Koppelnavigationseinrichtung und/oder in Abhängigkeit von Informationen einer externen Sendeeinrichtung aufweist, d a d u r c h   g e k e n n - z e i c h n e t ,   daß die Anzeigeeinrichtung (1) zusätzlich eine von den Ausgangssignalen der Koppelnavigationseinrichtung steuerbare Anzeige (7, 8, 9, 10) der Himmelsrichtung aufweist.

2. Einrichtung nach Anspruch 1, d a d u r c h   g e - k e n n z e i c h n e t ,   daß die Anzeigeeinrichtung (1) in einem Rundinstrument (2) koaxiale Anzeigemittel für die Zielrichtung (4) und für eine Kompaßrose (7, 8, 9, 10) aufweist.

3. Einrichtung nach Anspruch 1 oder 2, d a d u r c h   g e k e n n z e i c h n e t ,   daß als Anzeigemittel für die Zielrichtung und/oder die Himmelsrichtung LCD-Elemente vorgesehen sind.

Europäisches
Patentamt

**EUROPÄISCHER RECHERCHENBERICHT**

0170725

Nummer der Anmeldung

EP 84 11 5613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | GB-A- 985 976 (THE MINISTER OF NATIONAL DEFENCE OF HER MAJESTY'S CANADIAN GOVERNMENT) * Seite 2, Zeilen 18-66 * | 1,2 | G 01 C 21/12 |
| | --- | | |
| X | FR-A-1 275 969 (SPERRY) * Seiten 2,3 * | 1,2 | |
| | --- | | |
| A | GB-A-2 060 880 (LICENTIA) * Seite 7, Zeilen 24-73 * | 1 | |
| | --- | | |
| A | FR-A-2 506 046 (R. BOSCH) * Seite 2, Zeilen 11-32 * | 3 | |
| | ----- | | |

| RECHERCHIERTE SACHGEBIETE (Int. Cl. 4) |
|---|
| G 01 C |

Der vorliegende Recherchenbericht wurde für alle Patentansprüche erstellt.

| Recherchenort DEN HAAG | Abschlußdatum der Recherche 11-10-1985 | Prüfer DE BUYZER H.J. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument